# EUROPÄISCHE PATENTANMELDUNG

(11) **EP 2 524 827 A1**
(43) Veröffentlichungstag der Anmeldung: **21.11.2012**
(21) Anmeldenummer: 12165207.7
(22) Anmeldetag: 23.04.2012
(51) Int. Cl.: B60G 21/055, B60G 17/019, G01L 5/00, G01L 1/00

(54) **Wankstabilisator eines Kraftfahrzeuges**

(30) Priorität: 16.05.2011 DE 102011075890
(71) Anmelder: Schaeffler Technologies AG & Co. KG, 91074 Herzogenaurach (DE)
(72) Erfinder: Wittmann, Bernd, 96178 Pommersfelden (DE); Mayer, Ralf, 91074 Herzogenaurach (DE); Heim, Jens, 97493 Bergrheinfeld (DE)

(57) **Zusammenfassung**

Wankstabilisator eines Kraftfahrzeuges, mit einem Rücken (1, 9) und an einander gegenüberliegenden Enden des Rückens (1, 9) angeordneten Schenkeln (3, 14, 15), die zu dem Rücken (1, 9) abgewinkelt sind und an deren von dem Rücken (1, 9) abgewandten Schenkelenden unter Torsion des Rückens (1, 9) eine Stützkraft (Fz) angreift, wobei ein Kraftsensor (22) zur Ermittlung der Stützkraft (Fz) vorgesehen ist.

## Beschreibung

Die Erfindung betrifft Wankstabilisatoren, die in Kraftfahrzeugen zur Verbesserung der Straßenlage eingesetzt werden.

Das Einfedern des kurvenäußeren Rades und das Ausfedern des kurveninneren Rades erzeugen ein Drehmoment in dem Wankstabilisator, das bei Kurvenfahrten dem Wanken der Karosserie entgegenwirkt. Bei gleichzeitigem Einfedern beider Räder zeigt der Stabilisator keine Wirkung. Einseitiges Einfedern bei Geradeausfahrt - beispielsweise bei der Durchfahrt von Straßenunebenheiten - kann zu Bewegungen des Fahrzeugs um die Längsachse führen.

Der Wankstabilisator verbindet gegenüberliegende Räder einer Achse durch Hebel und eine Torsionsfeder. Die Federwirkung wird durch die Torsion der Torsionsfeder erreicht. Die Torsionsfeder kann durch einen Drehstab gebildet sein.

Der als Rücken bezeichnete Mittelteil des Wankstabilisators ist drehbar an der Karosserie, die abgewinkelten Schenkel, die als Hebel wirken, sind direkt oder indirekt an den Radführungselementen, beispielsweise Querlenkern, angebracht.

Der Rücken wird auf Torsion beansprucht. Der Rücken kann durch einen Drehstab gebildet sein, an dessen voneinander abgewandten Enden die beiden Schenkel befestigt sein können.

Bei aktiven Wankstabilisatoren kann der Rücken durch zwei Stabilisatorhälften gebildet sein, die durch einen geteilten Drehstab gebildet sein können. Zwischen einander zugewandten Enden der Drehstabteile ist ein sogenannter Aktuator angeordnet, der aktiv eine Torsion der beiden Drehstabteile zueinander bewirkt.

Bei passiven Wankstabilisatoren wird ein unterschiedliches Eintauchverhalten der Räder einer Fahrzeugquerachse durch eine Torsion des Rückens des Wankstabilisators kompensiert. Der Torsionsabschnitt bei passiven Wankstabilisatoren kann sich über einen Großteil der gesamten Fahrzeugbreite erstrecken.

Die Schenkel bilden jeweils einen an dem Drehstab angreifenden Hebel, wobei ein in dem Rücken wirkendes Torsionsmoment über den wirksamen Hebelarm der Schenkel eine Stützkraft an den Schenkelenden ausübt. Das Schenkelende bezeichnet den Angriffspunkt für die Stützkraft, wobei zwischen dem Angriffspunkt und dem Rücken ein Hebel für die Ausübung eines Torsionsmomentes gebildet ist.

Die Schenkelenden sind an Radführungselementen gelagert. Die Stützkraft kann auf das Radführungselement übertragen werden und einem unerwünschten Eintauchen des kurvenäußeren Rades entgegenwirken.

Bei den aktiven Wankstabilisatoren verstärkt ein Aktuator das wirksame Torsionsmoment, das dem Wanken entgegenwirkt. Zwei Stabilisatorhälften können über den Aktuator drehbar miteinander verbunden sein. Jede Stabilisatorhälfte kann als Drehstab ausgeführt sein. Beide Stabilisatorhälften können an ihren voneinander abgewandten Enden jeweils mit den Schenkeln in der beschriebenen Weise versehen sein. Die beiden Stabilisatorhälften können gleich lang aber auch unterschiedlich lang ausgeführt sein. Der Aktuator weist üblicherweise einen Motor und ein daran angeschlossenes Getriebe auf, wobei ein von dem Aktuator erzeugtes Drehmoment zwischen den beiden Stabilisatorhälften übertragen wird.

Über den Aktuator kann das zwischen den beiden Schenkeln wirkende Drehmoment gezielt eingestellt werden. Die Schenkelenden sind an Radführungselementen, beispielsweise an einen Lenker oder ein Federbein angeschlossen und übertragen dort die Stützkraft.

Die Druckschrift DE 102 33 499 A1 offenbart einen geteilten, aktiven Wankstabilisator mit zwei Stabilisatorhälften und mit einem Aktuator zur Wankregelung, wobei der Aktuator eine Einrichtung zur Drehmomentabgabe und eine Einrichtung zur Drehmomenterzeugung aufweist, wobei zumindest die Einrichtung zur Drehmomenterzeugung außerhalb des Zwischenraumes der beiden Stabilisatorhälften angeordnet ist.

In modernen Kraftfahrzeugen werden zur Verbesserung der Fahrsicherheit oftmals aktive Stelleinrichtungen eingesetzt, deren Regeleinrichtungen Zustandsgrößen wie die Querbeschleunigung oder den Neigungswinkel des Fahrzeigaufbaus um Fahrzeuglängsachse des Kraftfahrzeuges verarbeiten. Bei aktiven Wankstabilisatoren wird oftmals das in dem Rücken des Stabilisators wirkende Drehmoment erfasst. Im Fall von passiven Wankstabilisatoren liefert das gemessene Torsionsmoment Informationen über den aktuellen Zustand der Achsen; die eingesetzten Regelsysteme können diese Informationen berücksichtigen, um beispielsweise ein Ausbrechen des Fahrzeugs zu verhindern. Bei großen Federwegen der Räder kann es jedoch vorkommen, dass das ermittelte Torsionsmoment keinen einwandfreien Rückschluss zulässt auf die tatsächliche Belastung der Räder.

Aufgabe der Erfindung war es, einen verbesserten Wankstabilisator anzugeben.

Erfindungsgemäß wurde diese Aufgabe durch den Wankstabilisator gemäß Anspruch 1 gelöst. Dadurch, dass ein Kraftsensor zur Ermittlung der Stützkraft vorgesehen ist, kann unmittelbar die an dem Radführungselement wirkende Stützkraft angegeben werden. Verformungen von weiteren belasteten Bauteilen sind unbeachtlich. Bei der herkömmlichen Drehmomentmessung kann sich aufgrund von elastischen Verformung von belasteten Bauteile eine ungenügende Korrelation zwischen tatsächlicher Stützkraft und gemessenem Torsionsmoment einstellen. Die Erfindung vermeidet diesen Nachteil. Mit der ermittelten Stützkraft kann über die wirkenden Hebel das in dem Wankstabilisator wirkende Drehmoment angegeben werden.

Mit einem Kraftsensor wird eine Kraft direkt gemessen oder indirekt über eine Verformung des Kraftsensors; der Kraftsensor kann im Kraftfluss oder parallel zu dem Kraftfluss angeordnet sein.

Für die vorliegende Erfindung sind sogenannte Federkörper-Kraftsensoren geeignet. Aufgrund der Krafteinwirkung wird der Federkörper des Kraftsensors elastisch verformt. Die Kraftaufnahme muss in der vorgeschriebenen Richtung erfolgen. Die Verformung des Federkörpers wird über Dehnungsmessstreifen, deren elektrischer Widerstand sich mit der Dehnung ändert, in die Änderung einer elektrischen Spannung umgewandelt. Über einen Messverstärker kann die elektrische Spannung und damit die Dehnungsänderung registriert werden. Diese kann aufgrund der elastischen Eigenschaften des Federkörpers in einen Kraftmesswert umgerechnet werden, in dem der Kraftsensor kalibriert wird.

Für die vorliegende Erfindung sind sogenannte Membran-Kraftsensoren geeignet. Ein dosenförmiger Metallkörper wird gestaucht und somit auch die auf dessen Wandung verteilt angebrachten Dehnungsmessstreifen.

Für die vorliegende Erfindung sind sogenannte Piezo-Kraftsensoren geeignet. In einem Piezokeramik-Element entsteht durch Krafteinwirkung eine Ladungsverteilung, die proportional zur Kraft ist. Diese Ladung kann mit einem Ladungsverstärker gemessen werden. Je nach Art des kristallinen Aufbaus des Piezoelements können Druck- oder Scherkräfte gemessen werden. Zugkräfte können nur mit Vorspannung gemessen werden. Piezoelektrische Kraftsensoren können sehr steif ausgelegt werden und können auch hochdynamische Kräfte messen.

Die Erfindung eignet sich in besonders günstiger Weise für sogenannte Pendelstabilisatoren. Bei einem Pendelstabilisator ist ein Pendelgestänge an beiden Enden gelenkig gelagert, einerseits an dem Schenkel des Wankstabilisators, andererseits an einem Radführungselement. Das Pendelgestänge kann durch einen Pendelstab gebildet sein, der beidseitig über Kugelgelenke oder Drehgelenke gelagert ist. Kräfte werden entlang einer Wirkachse übertragen, auf der die Lagerachsen der beiden Gelenke liegen. Bei einem geradlinig ausgebildeten Pendelstab können die Wirkachse und die Pendelstabachse zusammenfallen.

Aufgrund der gelenkigen Lagerung des Pendelstabs kann eine Übertragung von Querkräften vermieden werden. Für den Fall, dass Querkräfte übertragen werden, können Kraftsensoren eingesetzt werden, die unempfindlich sind für Querkräfte.

Der Kraftsensor kann unmittelbar an dem Pendelgestänge angebracht sein, wobei das Pendelgestänge aufgrund einer als Stützkraft wirkenden Druckkraft oder Zugkraft elastisch verformt werden kann, wenn der Fahrzeugaufbau wankt. Mit der gemessenen elastischen Verformung des Pendelstabes kann mittels des Kraftsensors die wirkende Stützkraft ermittelt werden. In diesem Fall ist der Kraftsensor parallel zu dem Pendelgestänge geschaltet.

Die Stützkraft ist bei dem Pendelstabilisator die durch den Pendelstab geleitete Kraft, die zwischen dem Radführungselement und dem Schenkel des Wankstabilisators übertragen wird. Wenn die Stützkraft quer zu einer die Torsionsachse enthaltenden Ebene ausgerichtet ist, kann das wirksame Torsionsmoment über den Hebel ermittelt werden, der durch den Abstand zwischen der Torsionsachse und dieser Stützkraft gegeben ist. Wenn diese Stützkraft senkrecht zu dem Schenkel angeordnet ist, kann die Schenkellänge zugleich der wirksame Hebel sein. Der Schenkel liegt in diesem Fall in der gedachten Ebene, in der auch die Torsionsachse liegt. Wenn die Stützkraft nicht quer, sondern geneigt zu der die Torsionsachse enthaltenden Ebene ausgerichtet ist, kann über eine übliche Kräftezerlegung der Teil der Stützkraft ermittelt werden, der über den genannten Hebel das Torsionsmoment auf den Rücken ausübt.

Das Pendelgestänge oder der Pendelstab kann über ein Verbindungselement an dem Schenkel des Wankstabilisators und/ oder an dem Radführungselement gelagert sein. In diesem Fall kann der Kraftsensor in dem Verbindungselement angeordnet sein. Ein an dem Verbindungselement wirksam angeordneter Kraftsensor kann direkt die ausgeübte Stützkraft messen.

Das Verbindungselement kann als Kugelgelenk oder als Drehgelenk ausgeführt sein. In diesem Fall kann der Kraftsensor in Reihe mit dem Pendelstab geschaltet sein, so dass die Stützkraft voll auf den Kraftsensor übertragen wird.

Nachstehend wird die Erfindung anhand von zwei in vier Figuren abgebildeten Ausführungsbeispielen näher erläutert. Es zeigen
- Figur 1: einen erfindungsgemäßen aktiven Pendelstabilisator in schematischer Darstellung,
- Figur 2: ein vergrößert dargestelltes Einzelteil aus Figur 1,
- Figur 3: einen erfindungsgemäßen passiven Pendelstabilisator in schematischer Darstellung, und
- Figur 4: eine bekannte Vorderbeinachse mit einem herkömmlichen Pendelstabilisator.

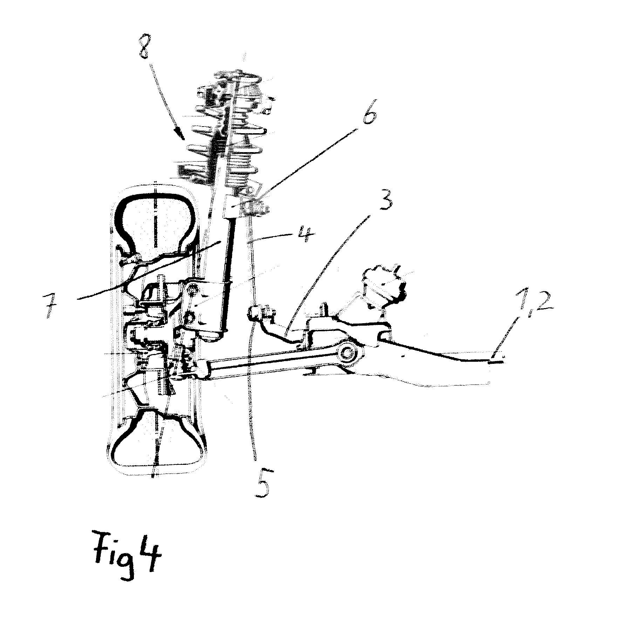

Figur 4 zeigt einen Ausschnitt einer bekannten Federbein-Vorderachse mit einem Pendelstabilisator, wie sie in dem Fachbuch Jörnsen Reimpell, "Fahrwerktechnik: Grundlagen", Vogel Verlag, 3. Auflage auf S. 20 abgebildet ist. Der Pendelstabilisator weist einen Rücken 1 auf, der durch einen Drehstab 2 gebildet ist. Der Drehstab 2 ist über nicht abgebildete Lager um seine Längsachse drehbar an dem Fahrzeugaufbau gelagert. Der Drehstab 2 erstreckt sich quer zur Fahrzeuglängsachse. An den beiden voneinander abgewandten Enden des Drehstabes 2 sind Schenkel 3 torsionsfest angeschlossen, die von dem Drehstab 2 abgewinkelt sind.

Figur 4 zeigt, dass an das freie Ende des Schenkels 3 ein Pendelstab 4 angeschlossen ist. Der Pendelstab 4 ist an seinem einen Ende über ein unteres Kugelgelenk 5 an dem freien Ende des Schenkels 3 gelagert. Der Pendelstab 4 ist an seinem anderen Ende über ein oberes Kugelgelenk 6 an einem Außenrohr 7 eines Federbeins 8 gelagert.

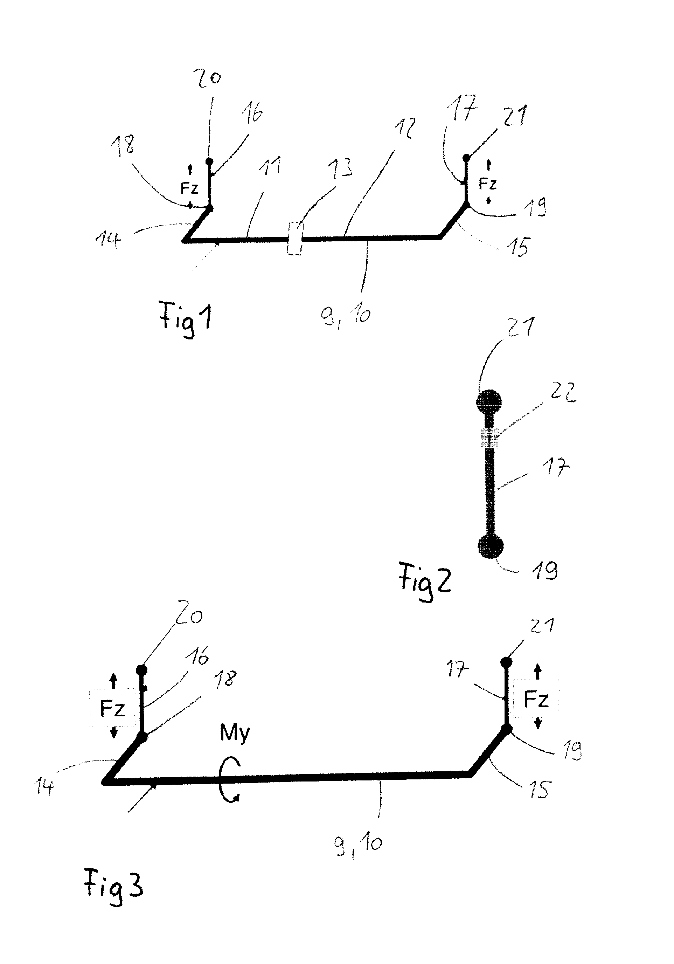

Figur 1 zeigt in schematischer Darstellung einen erfindungsgemäßen aktiven Wankstabilisator. Der Pendelstabilisator weist einen Rücken 9 auf, der durch einen geteilten Drehstab 10 gebildet ist. Der Drehstab 10 kann auf Torsion beansprucht werden. Der Drehstab 10 ist über nicht abgebildete Lager um seine Längsachse drehbar an dem nicht abgebildeten Fahrzeugaufbau gelagert. Der Drehstab 10 erstreckt sich quer zur Fahrzeuglängsachse.

Zwischen einander zugewandten Enden der beiden Drehstabteile 11, 12 des Drehstabes 10 ist ein Aktuator 13 angeordnet, an den die beiden Drehstabteile 11, 12 angeschlossen sind. Unter Betätigung des Aktuators 13 werden die beiden Stabilisatorteile 11, 12 zueinander tordiert.

An den beiden voneinander abgewandten Enden der beiden Drehstabteile 11, 12 des Drehstabes 10 sind Schenkel 14 15 angeschlossen, die von dem Drehstab 2 abgewinkelt sind. In der Darstellung sind die Schenkel 14, 15 rechtwinklig zu dem Drehstab 10 abgeordnet.

An den freien Enden der Schenkel 14, 15 ist jeweils ein Pendelstab 16, 17 angeschlossen. Beide Pendelstäbe 16, 17 sind jeweils an einen Ende über ein unteres Kugelgelenk 18, 19 an dem freien Ende des Schenkels 14, 15 gelagert. Die Pendelstäbe 16, 17 sind jeweils an ihrem anderen Ende über ein oberes Kugelgelenk 20, 21 an einem nicht abgebildeten Radführungselement gelagert.

Der Pendelstab 17 überträgt eine Stützkraft Fz zwischen dem nicht abgebildeten Radführungselement und dem Schenkel 15. In der schematischen Darstellung fallen die Pendelstabachse und die Wirkachse der Stützkraft Fz zusammen. Die Pendelstäbe 16, 17 stehen quer zu einer Ebene, in der eine Torsionsachse des Drehstabes 10 liegt. Die beiden Schenkel 14, 15 liegen in dieser Ebene.

Falls der Pendelstab 16, 17 konstruktionsbedingt nicht quer zu der Ebene angeordnet ist, in der die Torsionsachse des Drehstabs 10 sowie die Schenkel 14, 15 liegen, kann die Stützkraft in Kraftkomponenten zerlegt werden, von denen eine quer zu dieser Ebene angeordnet ist; auf diese Weise kann mit dieser so ermittelten Kraftkomponente das wirksame Torsionsmoment in dem Drehstab 10 ermittelt werden.

Figur 2 zeigt den Pendelstab 17 in vergrößerter Darstellung. Ein Kraftsensor 22 ist an dem Pendelstab 17 angebracht. Über die mit dem Kraftsensor 22 ermittelte Stützkraft Fz kann mit dem wirksamen Hebelarm das Torsionsmoment ermittelt werden, das in dem Drehstab 10 wirkt. In der Darstellung gemäß Figur 1 ist der wirksame Hebelarm durch die Länge des Schenkels 14, 15 gegeben. Die Erfassung der Pendelstützenkraft liefert ein zu dem in der Drehstabfeder 10 wirkenden Torsionsmoment proportionales Signal.

Der in Figur 2 abgebildete Kraftsensor 22 ist stellvertretend für unterschiedliche Typen von Kraftsensoren. Der Kraftsensor 22 kann im Kraftfluss oder parallel zu dem Kraftfluß angeordnet sein. Bei der ersten Alternative wird die Stützkraft Fz durch den Pendelstab 17 und durch den Kraftsensor 22 durchgeleitet. Bei der zweiten Alternative wird die Stützkraft Fz lediglich durch den Pendelstab 17 durchgeleitet. Eine unter der Stützkraft Fz hervorgerufene elastische Verformung des Pendelstabes 17 wird von dem Kraftsensor 22 erfasst und in eine korrespondierende Stützkraft Fz umgerechnet. Der Kraftsensor 22 kann in einer weiteren Variante einem der Kugelgelenke 19, 21 angeordnet sein.

Der Kraftsensor 22 ist kann auch bei dem in Figur 4 abgebildeten bekannten Pendelstabilisator in erfindungsgemäßer Weise eingesetzt werden.

Der Kraftsensor kann durch ein elastisch deformierbares Teil gebildet sein, beispielsweise durch eine Membran oder durch einen Steg. Die Stützkraft wird vorzugsweise durch dieses elastisch deformierbare Teil geleitet, das in günstiger Weise so ausgelegt ist, dass Querkräfte zu keiner nennenswerten Änderung des Messsignals führen. Die Signalwandlung erfolgt beispielsweise mit Widerstandselementen, wie sie durch aufgeklebte Dehnmessstreifen dargestellt werden können. Die Signalwandlung kann auch magnetisch oder optisch durch Abstandmessung oder durch Positionsmessung erfolgen. Magnetostriktive oder magnetoelastische Kraftsensoren können eingesetzt werden.

Figur 3 zeigt einen weiteren erfindungsgemäßen passiven Wankstabilisator, der sich durch den in den Figuren 1 und 2 abgebildeten Wankstabilisator lediglich dadurch unterscheidet, dass der Aktuator entfällt, wobei der Drehstab 10 nicht geteilt ist.

### Bezugszeichenliste

- 1.: Rücken
- 2.: Drehstab
- 3.: Schenkel
- 4.: Pendelstab
- 5.: unteres Kugelgelenk
- 6.: oberes Kugelgelenk
- 7.: Außenrohr
- 8.: Federbein
- 9.: Rücken
- 10.: Drehstab
- 11.: Drehstabteil
- 12.: Drehstabteil
- 13.: Aktuator
- 14.: Schenkel
- 15.: Schenkel
- 16.: Pendelstab
- 17.: Pendelstab
- 18.: unteres Kugelgelenk
- 19.: oberes Kugelgelenk
- 20.: unteres Kugelgelenk
- 21.: oberes Kugelgelenk

## Patentansprüche

1. Wankstabilisator eines Kraftfahrzeuges, mit einem Rücken (1, 9) und an einander gegenüberliegenden Enden des Rückens (1, 9) angeordneten Schenkeln (3, 14, 15), die zu dem Rücken (1, 9) abgewinkelt sind und an deren von dem Rücken (1, 9) abgewandten Schenkelenden unter Torsion des Rückens (1, 9) eine Stützkraft (Fz) angreift, **dadurch gekennzeichnet, dass** ein Kraftsensor (22) zur Ermittlung der Stützkraft (Fz) vorgesehen ist.

2. Als Pendelstabilisator ausgeführter Stabilisator nach Anspruch 1, bei dem an dem freien Schenkelende ein Pendelstab (4, 16, 17) beweglich gelagert ist, wobei die Stützkraft (Fz) durch den Pendelstab (4, 16, 17) geleitet wird.

3. Pendelstabilisator nach Anspruch 2, bei dem der Kraftsensor (22) an dem Pendelstab (4, 16, 17) angeordnet ist.

4. Pendelstabilisator nach Anspruch 2, bei dem der Pendelstab (4, 16, 17) über ein Verbindungselement an dem Schenkel (3, 14, 15) des Stabilisators gelagert ist, wobei der Kraftsensor (22) an dem Verbindungselement angeordnet ist.

5. Pendelstabilisator nach Anspruch 2, bei dem der Pendelstab (4, 16, 17) über ein Kugelgelenk (5, 6, 18, 19, 20, 21) gelagert ist, wobei der Kraftsensor an dem Kugelgelenk (5, 6, 18, 19, 20, 21) angeordnet ist.

6. Pendelstabilisator nach Anspruch 2, bei dem der Kraftsensor (22) parallel zu dem Pendelstab (4, 16, 17) geschaltet ist, wobei eine sich unter der Stützkraft (Fz) einstellende elastische Verformung des Pendelstabes (4, 16, 17) von dem Kraftsensor (22) erfasst wird.

7. Pendelstabilisator nach Anspruch 2, bei dem der Kraftsensor (22) in Reihe zu dem Pendelstab (4, 16, 17) geschaltet ist, wobei der Kraftsensor (22) die Stützkraft (Fz) trägt.

8. Stabilisator nach Anspruch 1, bei dem der Kraftsensor (22) als Federkörper-Kraftsensor, oder als Membran-Kraftsensor oder als Piezo-Kraftsensor ausgeführt ist.
